(19) Europäisches Patentamt / European Patent Office / Office européen des brevets

(11) **EP 1 816 230 A2**

(12) **EUROPEAN PATENT APPLICATION**

(43) Date of publication:
**08.08.2007 Bulletin 2007/32**

(51) Int Cl.:
**C23C 8/32** (2006.01) **C21D 9/40** (2006.01)
**F16C 33/64** (2006.01) **F16C 19/18** (2006.01)

(21) Application number: **07002124.1**

(22) Date of filing: **31.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **31.01.2006 JP 2006023379**

(71) Applicant: **JTEKT Corporation
Osaka-shi
Osaka 542-8502 (JP)**

(72) Inventors:
• **Kawaguchi, Toshihiro
Chuo-ku
Osaka-shi
Osaka 542-8502 (JP)**
• **Ueda, Hideo
Chuo-ku
Osaka-shi
Osaka 542-8502 (JP)**

(74) Representative: **Weber, Joachim
Hoefer & Partner
Patentanwälte
Pilgersheimer Strasse 20
81543 München (DE)**

(54) **Ball bearing for pinion shaft**

(57) In a double row ball bearing disposed around a pinion shaft to support the same, at least an inner ring member out of its inner and outer ring members is applied to a carbonitriding surface treatment, and hardness of at least inner ring raceway surfaces of the inner ring member is substantially the same as hardness of balls. With this construction, the bearing has an excellent load-withstanding performance, so that the lifetime of the bearing is prolonged.

*FIG. 1*

**Description**

**BACKGROUND OF THE INVENTION**

1. Field of the Invention

This invention relates to a ball bearing for supporting, for example, a pinion shaft used in a differential apparatus mounted on a vehicle or the like.

2. Related Art

Generally, a differential apparatus mounted on a vehicle has a pinion shaft mounted in a case, and a head-side portion and a tail-side portion of the pinion shaft are rotatably supported by a bearing device (see, for example, JP-A-11-48805) .

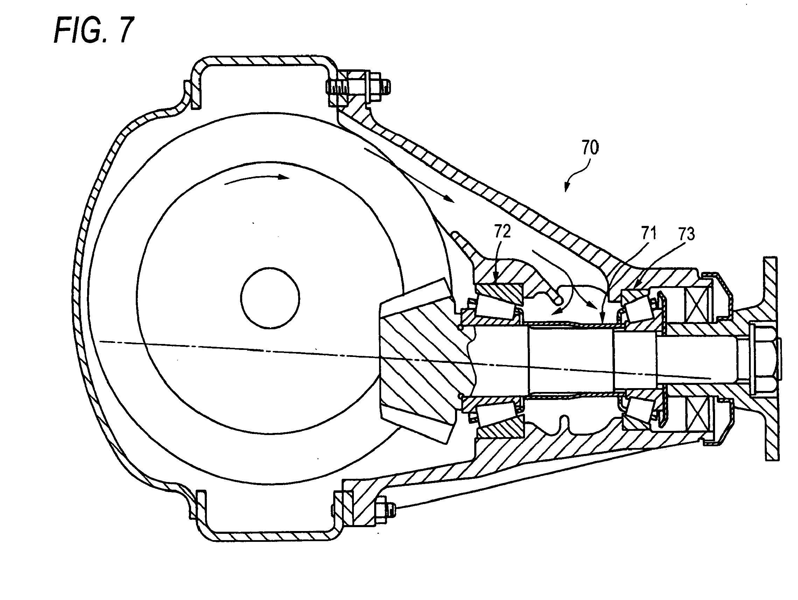

As shown in Fig. 7, tapered roller bearings 72 and 73 are used as the bearing device for supporting the opposite end portions of the pinion shaft 71 in the above differential apparatus 70.

In the above conventional bearing device, the tapered roller bearings 72 and 73 are used to support the opposite end portions of the pinion shaft 71. Therefore, a torque during the rotation of the pinion shaft 71 becomes large.

Therefore, it may be proposed to use ball bearings instead of the tapered roller bearings 72 and 73 in order to reduce the torque. In this case, however, load-withstanding performances of balls and raceway surfaces (bearing rings) against applied loads, etc., need to be sufficiently taken into consideration.

**SUMMARY OF THE INVENTION**

According to the present invention, there is provided a ball bearing for a pinion shaft including:

an inner ring member for fitting on an outer peripheral surface of the pinion shaft;
an outer ring member disposed in concentric relation to said inner ring member; and
a plurality of balls disposed between an inner ring raceway surface formed on an outer peripheral surface of said inner ring member and an outer ring raceway surface formed on an inner peripheral surface of said outer ring member;
wherein said inner and outer ring members and said balls are made of high-carbon chromium bearing steel or carburized. (carburizing) bearing steel; and
at least said inner ring member out of said inner and outer ring members is applied to a carbonitriding treatment and a hardening heat treatment, thereby forming a rolling surface layer on said inner ring member, so that hardness of said inner ring raceway surface is substantially the same as surface hardness of said balls.

In the above construction, the hardness of the raceway surface of at least the inner ring member out of the inner and outer ring members, that is, the hardness of the inner ring raceway surface, is substantially the same as the surface hardness of the balls, and therefore a load-withstanding performance is enhanced, and a lifetime of the bearing is prolonged.

Furthermore, in the above ball bearing for the pinion shaft, the surface of the balls is set to a Rockwell C hardness value of 63 to 67, and the surface of the inner ring member is set to a Rockwell C hardness value of 62 to 67, and the amount of surface retained austenite in the inner ring member is set to 20% to 45%.

Therefore, an indentation due to metallic powder is hardly formed on the raceway surface, and even if such indentation is formed, a height of a bulged portion of the indentation becomes small with time, that is, in a short time, in accordance with the rolling movement of the balls on the raceway surface.

Examples of the high-carbon chromium bearing steel used in the present invention include JIS specification SUJ2 steel, SUJ3 steel and SAE52100 steel. Examples of carburized (carburizing) steel used in the invention include JIS specification SCr420 material, SCr435 material, SCM430 material, SCM435 material, SCr430 material, SAE5120 material, SAE5130 material and SAE8620 material.

As is clear from the foregoing description, in the present invention, the load-withstanding performance of the bearing is enhanced, so that the lifetime of the bearing can be prolonged.

**BRIEF DESCRIPTION OF THE DRAWINGS**

Fig. 1 is a cross-sectional view roughly showing the construction of a differential apparatus incorporating a preferred embodiment of a bearing device of the present invention.

Fig. 2 is an enlarged cross-sectional view showing a condition in which pinion shaft-supporting double row ball bearings are used.

Fig. 3 is a an enlarged cross-sectional view showing the double row ball bearing alone.

Fig. 4 is an enlarged view showing an indentation formed on a raceway surface.

Fig. 5 is a graph in which the horizontal axis represents surface hardness (HRC), and the vertical axis represents a height of a bulged portion of an indentation.

Fig. 6 is a graph in which the horizontal axis represents a number of stress repetitions, and the vertical axis represents a height of a bulged portion of an indentation.

Fig. 7 is a cross-sectional view roughly showing the construction of a conventional differential apparatus.

## DETAILED DESCRIPTION OF THE PREFERRED EMBODIMENTS

A preferred embodiment of a pinion shaft-supporting ball bearing of the present invention (that is, a ball bearing for supporting a pinion shaft of a differential apparatus) will now be described with reference to the drawings.

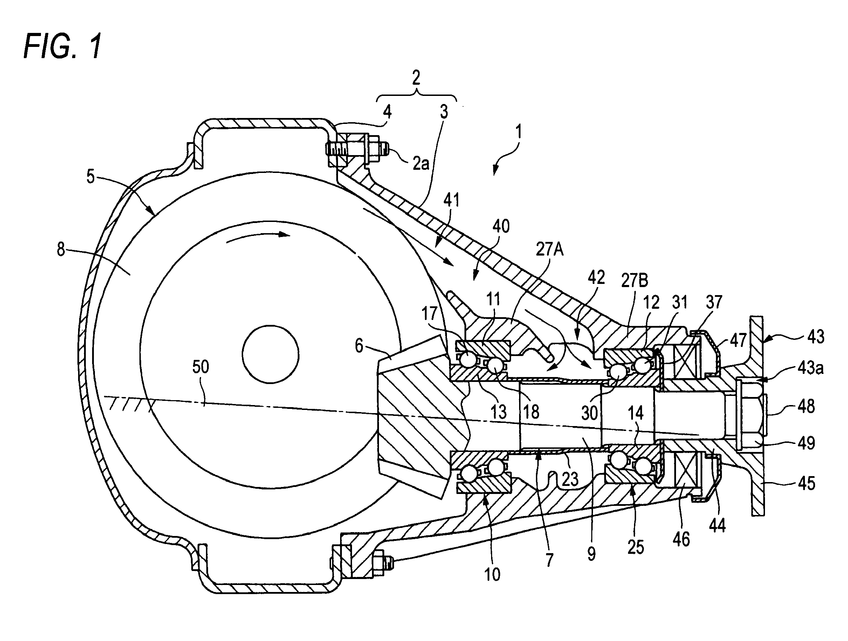

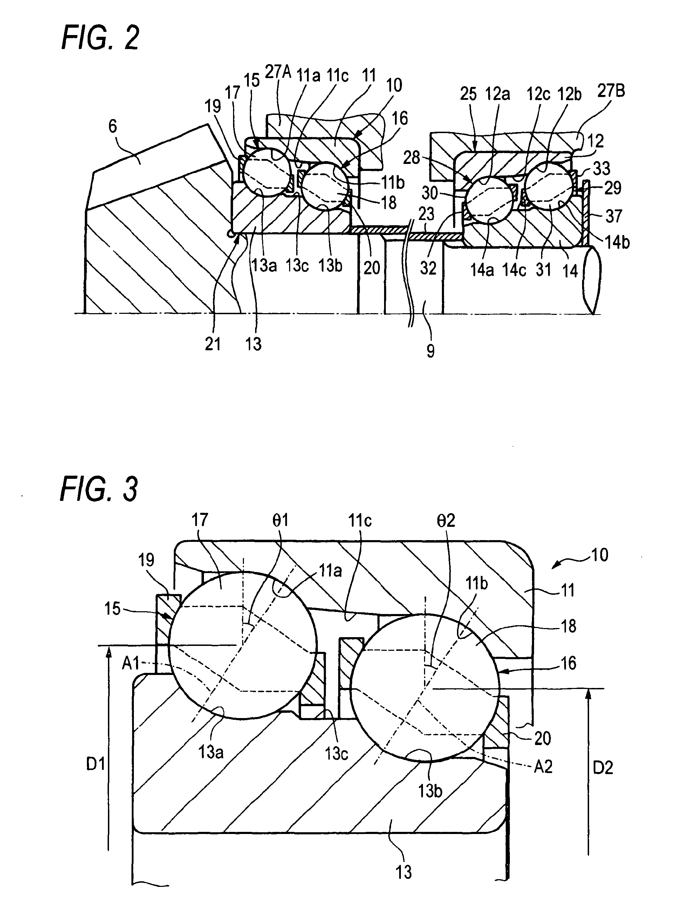

Fig. 1 is a cross-sectional view roughly showing the construction of the differential apparatus, Fig. 2 is an enlarged cross-sectional view showing a condition in which pinion shaft-supporting double row ball bearings are used, and Fig. 3 is a an enlarged cross-sectional view showing the double row ball bearing alone.

First, the overall construction of the differential apparatus 1 will be described. As shown in Fig. 1, the differential apparatus 1 includes a differential case 2. This differential case 2 comprises a front case 3 and a rear case 4, and the two cases 3 and 4 are connected together by a bolt/nut arrangement 2a. Bearing-mounting annular walls 27A and 27B are formed within the front case 3.

The differential case 2 contains a differential speed-change mechanism 5 connecting right and left wheels together in a differential manner, and a pinion shaft (drive pinion) 7 having a pinion gear 6 formed at one end thereof. The pinion gear 6 is in mesh with a ring gear 8 of the differential speed-change mechanism 5. A shaft portion 9 of the pinion shaft 7 is stepped to decrease in diameter sequentially toward the other end thereof.

The one end portion (pinion gear-side portion) of the shaft portion 9 of the pinion shaft 7 is supported on the annular wall 27A via the first double row angular contact ball bearing (hereinafter referred to merely as "double row ball bearing") 10 so as to rotate about an axis of the pinion shaft. Also, the other end portion (anti-pinion-gear-side portion) of the shaft portion 9 is supported on the annular wall 27B via the second double row angular contact ball bearing (hereinafter referred to merely as "double row ball bearing"). 25 so as to rotate about the axis of the pinion shaft.

As shown in Fig. 2, the first double row ball bearing 10 comprises a single first outer ring member 11 having a pinion gear-side larger-diameter outer ring raceway surface 11a and an anti-pinion-gear-side smaller-diameter outer ring raceway surface 11b, and a first assembly 21. The first double row ball bearing 10 is assembled by mounting the first assembly 21 onto the first outer ring member 11 in the direction of the axis of the pinion shaft and also in a direction away from the pinion gear.

The first outer ring member 11 is fitted on an inner peripheral surface of the annular wall 27A. A counter-bored outer ring is used as this first outer ring member 11. The first outer ring member 11 has a flat surface portion 11c formed between the larger-diameter outer ring raceway surface 11a and the smaller-diameter outer ring raceway surface 11b, and this flat surface portion 11c is larger in diameter than the smaller-diameter outer ring raceway surface 11b, and is continuous with the larger-diameter outer ring raceway surface 11a. With this construction, the inner peripheral surface of the first outer ring member 11 is formed into a slanting shape.

The first assembly 21 comprises a single first inner ring member 13 having a larger-diameter inner ring raceway surface 13a opposed to the larger-diameter outer ring raceway surface 11a of the first outer ring member 11 in the radial direction and a smaller-diameter inner ring raceway surface 13b opposed to the smaller-diameter outer ring raceway surface 11b in the radial direction, a pinion gear-side larger-diameter-side ball group 15, an anti-pinion-gear-side smaller-diameter-side ball group 1.6, a resin-made cage 19 holding balls 17 (forming the ball group 15) at equal intervals in the circumferential direction, and a resin-made cage 20 holding balls 18 (forming the ball group 16) at equal intervals in the circumferential direction. A counter-bored inner ring is used as the first inner ring member 13. The pinion shaft 7 is passed through the first inner ring member 13.

The first inner ring member 13 has a flat surface portion 13c formed between the larger-diameter inner ring raceway surface 13a and the smaller-diameter inner ring raceway surface 13b, and this flat surface portion 13c is larger in diameter than the smaller-diameter inner ring raceway surface 13b, and is continuous with the larger-diameter inner ring raceway surface 13a. With this construction, the outer peripheral surface of the first inner ring member 13 is formed into a stepped shape.

An end surface of the first inner ring member 13 abuts against an end surface of the pinion gear 6 in the axial direction, and the first inner ring member 13 is held between the end surface of the pinion gear 6 and a preload-setting plastic spacer 23 (fitted on an intermediate portion of the shaft portion 9 of the pinion gear 7) in the axial direction.

In the first double row ball bearing 10, each ball 17 of the larger-diameter-side ball group 15 is equal in diameter to each ball 18 of the smaller-diameter-side ball group 16, and the ball groups 15 and 16 have different pitch circle diameters D1 and D2, respectively, as shown in Fig. 3. Namely, the pitch circle diameter D1 of the larger-diameter-side ball group 15 is larger than the pitch circle diameter D2 of the smaller-diameter-side ball group 16. The first double row ball bearing 10 having the ball groups 15 and 16 having the different pitch circle diameters D1 and D2 is called "a tandem-type double row ball bearing".

The balls 17 and 18 are made, for example, of bearing steel such as JIS SUJ2 or SAE52100, and their surface hardness is set to 62 to 66 on a Rockwell C hardness (HRC) scale.

The first outer ring member 11 and the first inner ring member 13 are made of carburized steel (such for example as JIS SCr420, SAE5120 or the like) containing 0.1 to 1.0 wt.% C (carbon). The first outer ring member 11 and the first inner ring member 13 are applied to a heat treatment such as a carbonitriding treatment or a high concentration carburizing treatment, and as a result the surface hardness of each of the first outer ring member 11 and the first inner ring member 13 in a region from its surface to a depth of 50 $\mu$m is set to HRC 63 to 67 which is substantially equal to the surface hardness of the balls 17 and 18. Furthermore, the amount of surface retained austenite is not smaller than 20% and not larger than 25%.

The first outer ring member 11 and the first inner ring member 13 are produced by the following method. A carburizing and quenching treatment is applied to a bearing part stock (made of carburized steel) beforehand worked into a predetermined shape, and then a sub-zero treatment is applied to the bearing part after it is applied to a preliminary tempering treatment, and further a complete tempering treatment is applied to the bearing part.

The carburizing and quenching treatment is carried by holding the bearing part at a temperature of 900 to 950°C for a predetermined period of time. At this time, the surface hardness of the carburized and quenched surface or layer is HRC55 to 65, and the amount of retained austenite is about 30 to about 65%. The preliminary tempering treatment is carried out by holding the bearing part at a temperature of 110 to 130°C for one hour or more. The sub-zero treatment is carried out by holding the bearing part at a temperature of -50 to -80°C for one hour or more. The surface hardness after the sub-zero treatment is HRC63 to 68, and the amount of the retained austenite is about 20 to about 25%.

Then, after a similar carburizing and quenching treatment as described above is carried out, a secondary quenching (hardening) treatment is carried out, and further after a similar preliminary tempering treatment and a similar sub-zero treatment as described above are carried out, a complete tempering treatment is carried out. This secondary quenching treatment is carried out by heat-treating the bearing part at a temperature of 800 to 850°C for 0.5 hour or more and then by cooling it, for example, by oil. The complete tempering treatment is carried out by holding the bearing part at a temperature of 140 to 175°C for two hours or more.

With this method, the desired retained austenite amount can be obtained. Namely, when the sub-zero treatment is carried out without effecting the preliminary tempering treatment, the austenite is liable to be decomposed to become martensite, so that the retained austenite amount is reduced. However, by effecting the preliminary tempering treatment, the retained austenite which is unstable after the carburizing and quenching treatment becomes stable, and is less liable to become martensite even when the sub-zero treatment is carried out. Incidentally, in the above method, the need for the preliminary tempering treatment can, in some cases, be obviated by suitably adjusting the treatment temperature of the sub-zero treatment.

In conventional rolling bearings of this type, the surface hardness of first outer and inner ring members (corresponding respectively to the first outer and inner ring members 11 and 13) has heretofore been set to HRC60 to 64.

In the first double row ball bearing 10 of this embodiment, the larger-diameter inner ring raceway surface 13a and the smaller-diameter inner ring raceway surface 13b have substantially the same radius of curvature as shown in Fig. 3, and this radius of curvature is represented by Ri. In the first double row ball bearing 10, the larger-diameter outer ring raceway surface 11a and the smaller-diameter outer ring raceway surface 11b have substantially the same radius of curvature, and this radius of curvature is represented by Ro. The diameter of the balls 17 and 18 is represented by Bd. The radius Ri of curvature, the radius Ro of curvature and the diameter Bd are so determined as to satisfy the following formulas (1), (2) and (3).

$$Ri < Ro \ ... \ (1)$$

$$0.502 \cdot Bd \leq Ri \leq 0.512 \cdot Bd \ ... \ (2)$$

$$0.510 \cdot Bd \leq Ro \leq 0.520 \cdot Bd \quad \ldots \quad (3)$$

The radius Ro of curvature is 1% larger than the radius Ri of curvature. More specifically, in the case of Ri = 0.505 ·Bd, Ro = 0.515Bd is provided.

Incidentally, conventional rolling bearings of this type have heretofore been arranged such that the formula, $0.515 \cdot Bd \leq Ri \leq 0.525 \cdot Bd$, and the formula, $0.525 \cdot Bd \leq Ro \leq 0.535 \cdot Bd$, are established.

In this embodiment, when an angle formed by an action line A1 (interconnecting two points at which the ball 17 contacts the inner and outer ring raceway surfaces 13a and 11a) and a radial plane, that is, a contact angle, is represented by θ1, and an angle formed by an action line A2 (interconnecting two points at which the ball 18 contacts the inner and outer ring raceway surfaces 13b and 11b) and a radial plane, that is, a contact angle, is represented by θ2, the relation, θ1 = θ2, is established. θ1, θ2 satisfies the following formula (4).

$$20° \leq (θ1, θ2) \leq 45° \quad \ldots \quad (4)$$

More specifically, θ1, θ2 is set to any of 20°, 25°, 30°, 35°, 40° and 45°.

As shown in Fig. 2, the second double row ball bearing 25 comprises a single second outer ring member 12 having a pinion gear-side smaller-diameter outer ring raceway surface 12a and an anti-pinion-gear-side larger-diameter outer ring raceway surface 12b, and a second assembly 22. The second double row ball bearing 25 is assembled by mounting the second assembly 22 onto the second outer ring member 12 in the direction of the axis of the pinion shaft and also in the direction toward the pinion gear. The second outer ring member 12 has a flat surface portion 12c formed between the smaller-diameter outer ring raceway surface 12a and the larger-diameter outer ring raceway surface 12b, and this flat surface portion 12c is larger in diameter than the smaller-diameter outer ring raceway surface 12a, and is continuous with the larger-diameter outer ring raceway surface 12b.

With this construction, the inner peripheral surface of the second outer ring member 12 is formed into a slanting shape. The second outer ring member 12 is fitted on an inner peripheral surface of the annular wall 27B. A counter-bored outer ring is used as this second outer ring member 12.

The second assembly 22 comprises a single second inner ring member 14 having a smaller-diameter inner ring raceway surface 14a opposed to the smaller-diameter outer ring raceway surface 12a of the second outer ring member 12 in the radial direction and a larger-diameter inner ring raceway surface 14b opposed to the larger-diameter outer ring raceway surface 12b in the radial direction, a pinion gear-side smaller-diameter-side ball group 28, an anti-pinion-gear-side larger-diameter-side ball group 29, a cage 32 holding balls 30 (forming the ball group 28) at equal intervals in the circumferential direction, and a cage 33 holding balls 31 (forming the ball group 29) at equal intervals in the circumferential direction. A counter-bored inner ring is used as the second inner ring member 14. The pinion shaft 7 is passed through the second inner ring member 14, and the second inner ring member 14 is held between the preload-setting plastic spacer 23 and a closure plate 37 in the axial direction.

The second inner ring member 14 has a flat surface portion 14c formed between the smaller-diameter inner ring raceway surface 14a and the larger-diameter inner ring raceway surface 14b, and this flat surface portion 14c is smaller in diameter than the larger-diameter inner ring raceway surface 14b, and is continuous with the smaller-diameter inner ring raceway surface 14a. With this construction, the outer peripheral surface of the second inner ring member 14 is formed into a stepped shape.

In the second double row ball bearing 25, each ball 30 of the smaller-diameter-side ball group 28 is equal in diameter to each ball 31 of the larger-diameter-side ball group 29, and the ball groups 28 and 29 have different pitch circle diameters (not designated by reference numerals), respectively. Namely, the pitch circle diameter of the smaller-diameter-side ball group 28 is smaller than the pitch circle diameter of the larger-diameter-side ball group 29. This second double row ball bearing 25 is also a tandem-type double row ball bearing".

The second double row ball bearing 25 is smaller in diameter than the first double row ball bearing 10. More specifically, the second outer ring member 12 is smaller in diameter than the first outer ring member 11, and the second inner ring member 14 is smaller in diameter than the first inner ring member 13, and the pitch circle diameter of the ball group 29 of the second double row ball bearing 25 is smaller than the pitch circle diameter D1 of the ball group 15 of the first double row ball bearing 10, and the pitch circle diameter of the ball group 28 of the second double row ball bearing 25 is smaller than the pitch circle diameter D2 of the ball group 16 of the first double row ball bearing 10.

In the first and second double row ball bearings 10 and 25, the balls 17 and 31 of the larger-diameter-side ball groups 15 and 29 are equal in diameter to the balls 18 and 30 of the smaller-diameter-side ball groups 16 and 28. The materials respectively forming the constituent elements (the outer ring member, the inner ring member, the balls and the cages) of the first double row ball bearing 10 are similar respectively to those of the second double row ball bearing 25, and the contact angles in the first and second double row ball bearings 10 and 25 are equal to each other although the directions of these contact angles are reversed relative to each other. Therefore, explanation of these will be omitted.

In the differential apparatus 1 of this embodiment, the front case 3 has an oil circulating passageway 40 formed between its outer wall and the annular wall 27A as shown in Fig. 1, and an oil inlet 41 of the oil circulating passageway 40 is open toward the ring gear 8, and an oil outlet 42 of the oil circulating passageway 40 is open to a region between the annular walls 27A and 27B.

The differential apparatus 1 includes a companion flange 43. This companion flange 43 includes a barrel portion 44, and a flange portion 45 formed integrally with the barrel portion 44. The barrel portion 44 is fitted on the other end portion (disposed close to a drive shaft (not shown)) of the shaft portion 9 of the pinion gear 7.

The closure plate 37 is interposed between one end surface of the barrel portion 44 and an end surface of the second inner ring member 14 of the second double row ball bearing 25. An oil seal 46 is disposed between the outer peripheral surface of the barrel portion 44 and an inner peripheral surface of an opening portion (remote from the pinion gear) of the front case 3. A seal protection cup 47 is attached to the opening portion of the front case 3, and covers the oil seal 46. A threaded portion 48 is formed at the other end portion of the shaft portion 9, and projects into a recess 43a formed in a central portion of the flange portion 45. A nut 49 is threaded on the threaded portion 48.

The nut 49 is thus threaded on the threaded portion 48, and by doing so, the first inner ring 13 of the first double row ball bearing 10 and the second inner ring 14 of the second double row ball bearing 25 are held between the end surface of the pinion gear 6 and the end surface of the companion flange 43 in the axial direction, so that a predetermined preload is imparted to the balls 17 and 18 of the first double row ball bearing 10 and the balls 30 and 31 of the second double row ball bearing 25 through the closure plate 37 and the plastic spacer 23.

In the differential apparatus 1 of the above construction, oil 50 is stored at a predetermined level within the differential case 2 when the operation is stopped. During the operation, the oil 50 is circulated within the differential case 2, that is, the oil 50 is spattered in accordance with the rotation of the ring gear 8, and is fed through the oil circulating passageway 40 within the front case 3, and is supplied to upper portions of the first and second double row ball bearings 10 and 25 to lubricate the first and second double row ball bearings 10 and 25.

In this embodiment, the first double row ball bearing 10 having a small frictional resistance is used as the pinion gear-side ball bearing (disposed close to the pinion gear 6) on which larger loads act as compared with the anti-pinion-gear side ball bearing disposed remote from the pinion gear 6. With this arrangement, a rotation torque becomes smaller as compared with the tapered roller bearings used in the conventional bearing device, and the efficiency of the differential apparatus 1 can be enhanced. And besides, not a single row ball bearing but the double row ball bearing is used as each of the first and second ball bearings, and with this construction a larger load capacity can be achieved as compared with such a single row ball bearing, and a sufficient supporting rigidity can be obtained.

Furthermore, there is used the first double row ball bearing 10 of the tandem type in which the pitch circle diameter D1 of the pinion gear (6)-side larger-diameter-side ball group 15 is larger than the pitch circle diameter D2 of the anti-pinion-gear-side smaller-diameter-side ball group 16. Therefore, the number of the balls 17 of the pinion gear (6)-side larger-diameter-side ball group 15 (on which a larger load acts when the balls 17 and 18 of the two rows have the same diameter) can be increased, and therefore the first double row ball bearing 10 can withstand a large load.

Incidentally, in the above differential apparatus 1, metallic wear powder develops within the differential case 2. This metallic wear powder is included in the oil 50, and intrudes into the interior of the first double row ball bearing 10, and reaches the inner and outer ring raceway surfaces thereof.

However, as indicated by the formulas (2) and (3), the radius Ri of curvature of the inner ring raceway surfaces 13a and 13b and the radius Ro of curvature of the outer ring raceway surfaces 11a and 11b are both made smaller than those of conventional bearing devices, and with this construction the area of contact (receiving surface) between each ball 17 and each of the inner and outer ring raceway surfaces 13a and 11a, as well as the area of contact between each ball 18 and each of the inner and outer ring raceway surfaces 13b and 11b, increases, and a contact pressure is reduced, so that an indentation or impression is hardly formed on the inner and outer ring raceway surfaces. And besides, as indicated in the above formula (4), the value of the contact angle θ1, θ2 is larger than the value (20° ≤ (θ1, θ2) ≤ 25°) of conventional bearing devices, and with this arrangement the load capacity for the axial load is increased.

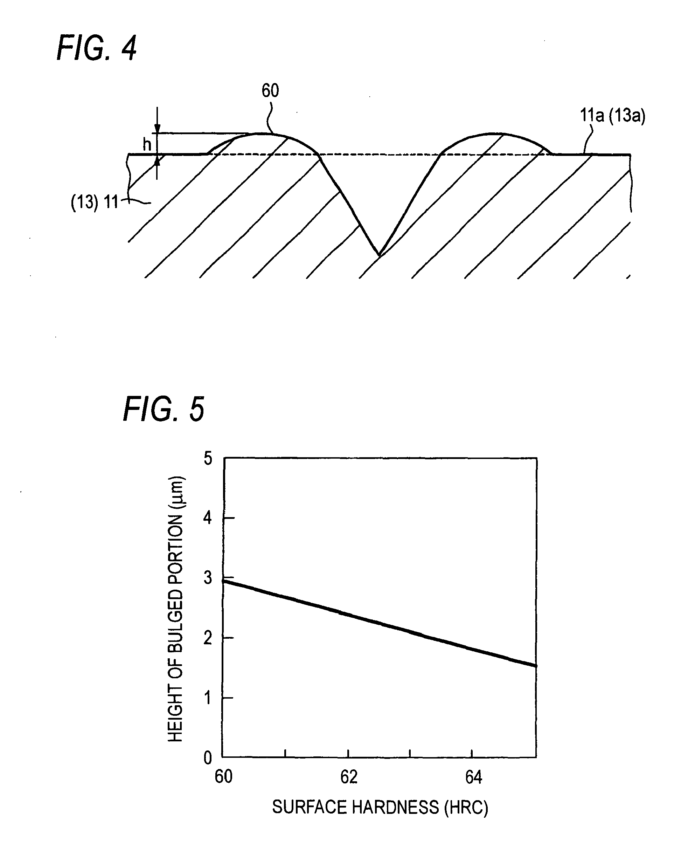

As described above, in this embodiment, although an indentation or impression is hardly formed on the inner and outer ring raceway surfaces, there are occasions when such indentation is formed as shown in an enlarged view of Fig. 4. However, the surface hardness of the conventional first outer ring member (corresponding to the first outer ring member 11) is set to HRC60 to 64, whereas the surface hardness of each of the first outer ring member 11 and the first inner ring member 13 is set to HRC62 to 67, and the amount of the surface retained austenite is set to the range from not smaller than 20% to less than 25%. Therefore, in accordance with the rolling movement of the balls 17 and 18 on the respective raceway surfaces, a height $\underline{h}$ of a bulged portion of the indentation becomes small with time (in a short time).

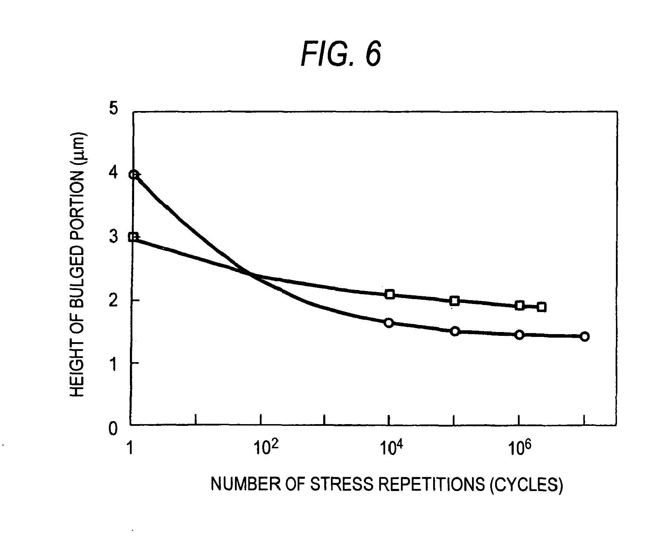

Fig. 5 is a graph in which the horizontal axis represents surface hardness (HRC), and the vertical axis represents

a height $\underline{h}$ ($\mu$m) of a bulged portion 60 of an indentation. Fig. 6 is a graph showing results obtained through tests, in which the horizontal axis represents a number of stress repetitions (cycles), and the vertical axis represents a height $\underline{h}$ ($\mu$m) of a bulged portion 60 of an indentation.

In Fig. 6, marks O represent data obtained when a test piece having a surface hardness of HRC62.2 and a surface retained austenite amount of 16.9% was used, and marks □ represent data obtained when a test piece having a surface hardness of HRC62.9 and a surface retained austenite amount of 31.5% was used.

It will be appreciated from Fig. 6 that when the retained austenite amount increases, the height of the bulged portion will not become smaller than a certain level even when the number of stress repetitions increases. It is thought that the fact that the height $\underline{h}$ of the bulged portion 60 will not become small with the increased amount of the surface retained austenite is attributable to work hardening developing in the bulged portion 60.

Thus, in the embodiment of the invention, even when an indentation is formed on the inner and outer raceway surfaces, this indentation is decreased in a short time into such a small size as not to adversely affect the operation of the bearing. The above advantageous effects are also achieved in the second double row ball bearing 25.

In the above embodiment, although the first double row ball bearing 10 and the second double row ball bearing 25 are used as the bearings for supporting the pinion shaft of the differential apparatus 1 of the vehicle, the bearings 10 and 25 are not limited to such use. Namely, the bearing device of the invention can be applied to the type of apparatus in which one bearing ring (one constituent part of a double row ball bearing) is mounted on one of a shaft and a housing, while the other constituent part is mounted on the other of the shaft and the housing, and the shaft is passed through the housing.

**Claims**

1. A ball bearing for a pinion shaft comprising:

   an inner ring member for fitting on an outer peripheral surface of the pinion shaft;
   an outer ring member disposed in concentric relation to said inner ring member; and
   a plurality of balls disposed between an inner ring raceway surface formed on an outer peripheral surface of said inner ring member and an outer ring raceway surface formed on an inner peripheral surface of said outer ring member;
   wherein said inner and outer ring members and said balls are made of high-carbon chromium bearing steel or carburized bearing steel; and
   at least said inner ring member out of said inner and outer ring members is applied to a carbonitriding treatment and a hardening heat treatment, thereby forming a rolling surface layer on said inner ring member, so that hardness of said inner ring raceway surface is substantially the same as surface hardness of said balls.

2. A ball bearing for a pinion shaft according to claim 1, wherein the surface of said balls is set to a Rockwell C hardness value of 63 to 67, and the surface of said inner ring member is set to a Rockwell C hardness value of 62 to 67, and the amount of surface retained austenite in said inner ring member is set to 20% to 45%.

FIG. 1

*FIG. 2*

*FIG. 3*

## FIG. 4

## FIG. 5

## FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11048805 A